# FASCICULE DE BREVET EUROPEEN

(11) **EP 1 252 386 B1**
(45) Date de publication et mention de la délivrance du brevet: **04.10.2006**
(21) Numéro de dépôt: 00979276.3
(22) Date de dépôt: 30.11.2000
(51) Int. Cl.: D06N 5/00, C08L 95/00

(54) **MEMBRANE D'ETANCHEITE ET PROCEDE DE FABRICATION D'UNE MEMBRANE D'ETANCHEITE**
WASSERDICHTE MEMBRAN UND VERFAHREN ZU DESSEN HERSTELLUNG
SEALING MEMBRANE AND METHOD FOR MAKING A SEALING MEMBRANE

(30) Priorité: 30.11.1999 EP 99204042
(43) Date de publication de la demande: 30.10.2002
(73) Titulaire: IMPERBEL S.A., 1360 Perwez (BE)
(72) Inventeur: GETLICHERMANN, Michel, B-1360 Perwez (BE); COGNEAU, Patrick, B-1360 Perwez (BE)
(74) Mandataire: Quintelier, Claude
(86) Numéro de dépôt international: PCT/BE2000/000142
(87) Numéro de publication internationale: WO 2001/040569

(56) Documents cités:
- EP-A- 0 223 019
- EP-A- 0 273 105
- EP-A- 0 313 735
- EP-A- 0 315 239
- EP-A- 0 553 513
- EP-A- 0 937 750
- WO-A-97/24485
- US-A- 4 263 186
- US-A- 5 482 982

## Description

La présente invention se rapporte à une membrane d'étanchéité pourvue d'une couche anti-exsudation appliquée sur une face de la membrane et d'une masse bitumineuse appliquée sur l'autre face de la membrane, ladite masse bitumineuse comprenant 15 à 85 % de bitume.

Une membrane d'étanchéité pourvue d'une couche antiexsudation et destinée à être appliquée sur un toit, est connue de la demande de brevet internationale WO 97/24485. La couche antiexsudation, posée en surface, résout en particulier le problème d'exsudation en empêchant une migration d'huile vers la surface de la membrane. Cette exsudation est due aux variations de température et à l'action des rayons ultraviolets. Cette exsudation est de plus la cause d'un brunissage des eaux de pluie et d'une corrosion des métaux utilisés dans la collecte des eaux pluviales. En effet les huiles qui ont migré vers la surface se mélangent aux eaux de pluie causant ainsi leur brunissage. Ces phénomènes sont réduits grâce à l'utilisation d'une telle membrane.

Lorsque la membrane d'étanchéité pourvue d'une couche antiexsudation est posée en tant que revêtement d'un toit, l'on veille à ce que la couche antiexsudation soit en surface. Deux bandes juxtaposées sont soudées ou collées l'une à l'autre en les superposant le long de leurs bords où se fait la jonction. Un problème a toutefois été constaté à hauteur de cette jonction. En effet, la couche de bitume de la membrane supérieure est en contact avec la couche antiexsudation. Comme la couche antiexsudation empêche la migration d'huile au delà de cette couche, cette huile s'accumulera à hauteur du joint, pouvant entraîner un phénomène de délamination à cet endroit.

Le but de l'invention est d'obtenir une membrane d'étanchéité pour laquelle la durabilité et la résistance des joints au phénomène de délamination due à l'exsudation sont sensiblement améliorées.

A cette fin, la membrane d'étanchéité suivant l'invention est caractérisée en ce que ladite masse bitumineuse comprend 15 à 85 % de polymères, lesquels polymères comprennent de 5 à 85 % de polypropylènes atactiques, 0 à 10 % de polypropylènes isotactiques et une quantité située entre 1 à 50 % de polymères oléfiniques ayant une cristallinité intrinsèque, ladite masse bitumineuse comprenant également 0 à 49 % de charge, ces polymères oléfiniques à cristallinité intrinsèque étant tels qu'un mélange 75 % de bitume - 25 % polymère oléfinique à cristallinité intrinsèque présente une zone de fusion qui s'étend sur une plage de température allant de 84° à 158° C et dans laquelle le flux de chaleur (Fc) atteint un maximum.

La présence de ce polymère oléfinique permet de mieux stabiliser les huiles dans la masse bitumineuse grâce à sa cristallinité intrinsèque liée à sa structure macromoléculaire et à sa composition chimique. De cette façon, les huiles sont maintenues dans les zones cristallines, limitant ainsi sensiblement leur possibilité de migration sous l'effet de l'augmentation de la température. La limitation de cette migration entraînera alors à son tour une limitation du phénomène de délamination et donnera une durabilité plus importante du joint entre deux membranes juxtaposées. De plus, la flexibilité à froid de la membrane d'étanchéité sera maintenue au cours du temps. Il faut noter que le polymère oléfinique utilisé a une cristallinité intrinsèque et une composition chimique différentes du polypropylène isotactique couramment utilisé dans la masse bitumineuse. La quantité des polymères oléfiniques ayant une cristallinité intrinsèque permet une résistance des joints mesurée après vieillissement thermique qui est suffisante pour répondre aux exigences définies dans les Directives Européennes particulières aux revêtements d'étanchéité en bitume polymère APP armés.

Le mélange d'une masse bitumineuse avec des polyoléfines thermoplastiques est connu en tant que tel de la demande de brevet EP 0 937 750 et du brevet US 5 482 982. La solution proposée dans cette demande de brevet Européen résout un problème d'incorporer à une masse bitumineuse des polyoléfines afin d'obtenir des compositions bitumineuses de type bitume-polymère en phase homogène. A cette fin cette demande de brevet enseigne de dégrader la masse moléculaire des polyoléfines thermoplastiques à haute cristallinité. Toutefois, rien dans ce document n'enseigne une solution à un problème de résistance des joints au phénomène de délamination. Certes ce document enseigne la présence de polymères oléfiniques ayant une cristallinité intrinsèque dans du bitume, mais rien dans ce document enseigne que la présence de polymères oléfiniques ayant une cristallinité intrinsèque permet de solutionner un problème de délaminage due à l'exsudation. En effet, la température de fusion des compositions suivant ce document est supérieure ou égale à 110° C. Eu égard à une telle valeur de température, l'homme du métier n'envisagera pas d'utiliser cet enseignement pour résoudre un problème d'exsudation qui se produit à des températures inférieures à 110° C. Le brevet US 5 482 982 quant à lui est également silencieux pour ce qui concerne un problème d'exsudation.

Selon un mode de réalisation préféré de l'invention, les polymères oléfiniques ayant une cristallinité intrinsèque comportent des monomères d'éthylène et de propylène. Ces polymères assurent une compatibilité avec le bitume qui est supérieure à celle obtenue avec les polypropylènes isotactiques. Ils permettent aussi de garder une bonne flexibilité à froid.

Selon un autre mode de réalisation suivant l'invention, les polymères oléfiniques ayant une cristallinité intrinsèque comportent un monomère éthylène auquel au moins un monomère oléfinique insaturé dont le nombre d'atomes de carbone est supérieur à 3 est ajouté. Ces polymères permettent également cette compatibilité supérieure et de garder la flexibilité à froid.
En outre, l'invention se rapporte également à un procédé pour la fabrication d'une telle membrane d'étanchéité caractérisé en ce que la masse bitumineuse est appliquée par enduction par en dessous de la surface à enduire sur la face inférieure d'une nappe de fibres.

Généralement, l'imprégnation d'une ou plusieurs nappes de fibres par une masse bitumineuse pour fabriquer des membranes d'étanchéité se fait en imprégnant la ou les nappes de fibres par immersion dans un bac rempli de la masse bitumineuse ou par un dépôt de masse bitumineuse réalisé par effet de gravité. Ces méthodes décrites dans l'art antérieur présentent l'inconvénient de provoquer le débordement de la masse bitumineuse sur les bords de la nappe à imprégner, ce qui souille la face ne devant pas être imprégnée ainsi que les cylindres sur lesquels la nappe de fibres est transportée. Ceci est d'autant plus un problème si la nappe qui ne peut pas être imprégnée est celle où est appliquée la couche antiexsudation. De plus, le procédé connu peut entraîner une mauvaise imprégnation de la nappe ou des nappes et donc un risque de délaminage.

Les souillures de masse bitumineuse qui contaminent les cylindres de la ligne de fabrication peuvent entraîner la mise en non-conformité de nombreux m² de membrane d'étanchéité fabriquée.

L'invention a également pour but de réaliser un procédé de fabrication d'une membrane d'étanchéité qui apporte une solution au problème susdit.

A cette fin, un procédé de fabrication d'une membrane d'étanchéité suivant l'invention est caractérisé en ce que ladite masse bitumineuse est appliquée par enduction par en dessous de la surface à enduire sur la face inférieure de la première nappe de fibres. L'enduction par en dessous de la face inférieure permet de ne pas souiller la face supérieure où est appliquée la couche antiexsudation. De plus, la force de gravitation permettra à la masse bitumineuse excédentaire de retomber dans le bain et de ne pas venir souiller les cylindres.

De préférence le procédé suivant l'invention est caractérisé en ce qu'un voile de fibres de verre est utilisé en tant que première nappe. Ceci permet de donner à la membrane de bonnes propriétés de stabilité et de résistance à la traction.

Suivant une autre forme de réalisation du procédé suivant l'invention, celui-ci est caractérisé en ce que la résistance des joints de ces membranes d'étanchéité est au moins égale à 50N/5 cm. L'utilisation d'une masse bitumineuse différente permet d'en choisir une généralement moins chère qui se trouve en contact avec la toiture.

Dans ce qui suit, l'invention sera décrite plus en détail à l'aide des dessins annexés. Dans les dessins :
les fig. 1 à 3 illustrent le flux de chaleur en fonction de la température;
la fig. 4 est un graphique présentant les résultats d'un test de durabilité des joints de la membrane d'étanchéité suivant l'invention identifiée par la valeur de la résistance des joints mesurée au cours d'un vieillissement thermique accéléré;
la fig. 5 est un graphique présentant les résultats d'un test de durabilité de la flexibilité à froid de la membrane d'étanchéité suivant l'invention identifiée par la valeur de la température de non fissuration de la membrane mesurée au cours d'un vieillissement thermique accéléré;
la fig. 6 illustre schématiquement les deuxièmes et troisièmes étapes du procédé de fabrication d'une membrane d'étanchéité suivant l'invention;
la fig. 7 illustre, à échelle agrandie, une vue en coupe à travers une membrane d'étanchéité obtenue par l'application du procédé illustré à la fig. 6;
la fig. 8 illustre, à échelle agrandie, une vue en coupe à travers deux lés de membranes d'étanchéité qui se superposent au niveau de leurs bords.

Une membrane d'étanchéité en particulier pourvue d'une couche antiexsudation posée en surface suivant l'invention est fabriquée en appliquant une masse bitumineuse sur une ou plusieurs nappes de fibres. La couche antiexsudation réduit les effets de la chaleur et des rayons ultraviolets sur la membrane. En effet, cette couche antiexsudation limite considérablement la migration au delà de la couche antiexsudation des huiles présentes dans la masse bitumineuse. Ainsi, l'effet de vieillissement de la membrane causé par la chaleur et les rayons ultraviolets est réduit. La couche antiexsudation met pour ainsi dire la masse bitumineuse à l'abri des rayons ultraviolets.

Comme la migration des huiles au delà de la couche est empêchée par la couche antiexsudation, l'huile en migration ne peut que s'accumuler à hauteur du joint entre la masse bitumineuse et la couche antiexsudation sur laquelle le bord de la membrane est appliqué. Cette accumulation d'huile à hauteur du joint peut provoquer une délamination du joint et donc mener à des infiltrations d'eau.

Lorsque la membrane n'est pas pourvue de couche antiexsudation, la migration d'huile peut également se faire en direction de la face supérieure de la membrane. L'huile ainsi libérée, après dégradation sous l'effet des rayons ultraviolets, peut se mélanger à l'eau de pluie et se retrouver dans les eaux de décharge et pourrait provoquer la corrosion des conduites de décharge.

Il a maintenant été constaté que le problème de migration d'huile dans la membrane pouvait être réduit en modifiant la masse bitumineuse qui est utilisée pour fabriquer la membrane. A cette fin, la masse bitumineuse suivant l'invention comprend des substances situées dans la fourchette suivante :
15 à 85% de bitume, et
15 à 85% de polymères comprenant :
   5 à 85% de polypropylènes atactiques,
   0 à 10% de polypropylènes isotactiques,
   1 à 50% de polymères oléfiniques ayant
   une cristallinité intrinsèque,
0 à 49% de charge (minérale ou organique).

Un exemple de composition préférentielle de la masse bitumineuse suivant l'invention est situé dans la fourchette donnée ci-dessous :

| | |
|---|---|
| bitume | : 45 à 85%, |
| polypropylènes atactiques | : 10 à 50%, |
| polypropylènes isotactiques | : 0 à 3%, |
| polymères oléfiniques ayant une cristallinité intrinsèque | : 1 à 10%, |
| charge | : 5 à 25%. |

Un exemple typique de composition de la masse bitumineuse de l'invention est donné ci-dessous :

| | |
|---|---|
| bitume | : 55 %, |
| polypropylènes atactiques | : 17,5 %, |
| polypropylènes isotactiques | : 0,6 %, |
| polymères oléfiniques ayant une cristallinité intrinsèque | : 6,9 %, |
| charge | : 20 %. |

Les polymères oléfiniques ayant une cristallinité intrinsèque sont de préférence des polymères de synthèse mais peuvent aussi être des polymères oléfiniques obtenus par application du procédé tel que décrit dans EP-A 0 937 750. Le bitume utilisé possède de préférence une pénétrabilité à 25 °C située entre 60 et 200 dixièmes de millimètre.

Les polymères oléfiniques à cristallinité intrinsèque sont formés principalement par des monomères d'éthylène et de propylène. Toutefois, et suivant une autre forme de réalisation, ces polymères oléfiniques peuvent également être formés par un monomère éthylène auquel au moins un monomère oléfinique insaturé dont le nombre d'atomes de carbone, est supérieur à trois, a été ajouté. Ce dernier monomère oléfinique est par exemple un octène.

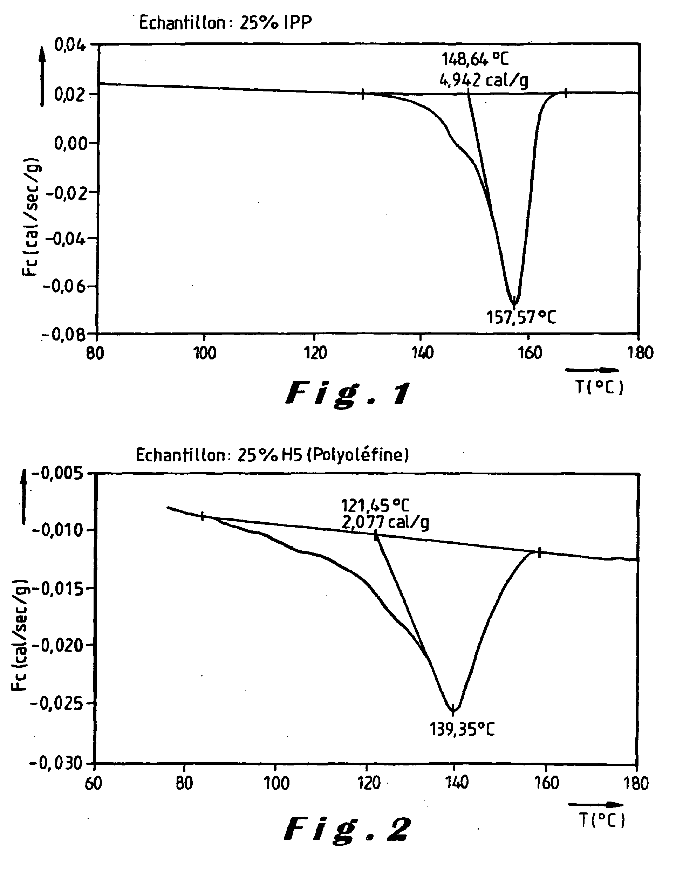

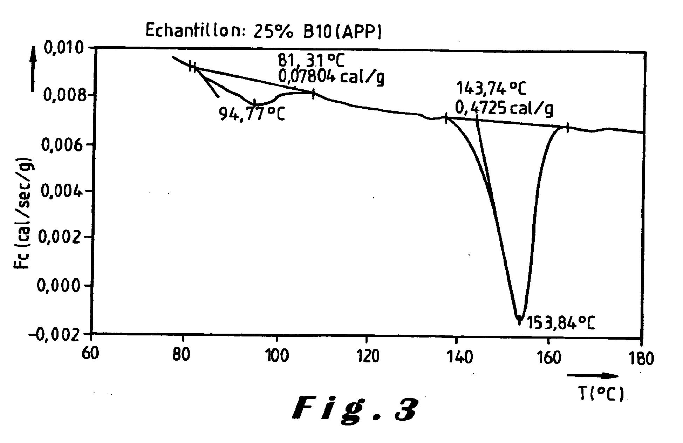

Il faut noter que les polymères oléfiniques ayant une cristallinité intrinsèque se distinguent des polypropylènes atactiques et isotactiques par leurs propriétés physiques et chimiques. La technique d'analyse calorimétrique différentielle permet d'observer et de quantifier ces modifications chimiques et physiques qu'un polymère peut subir si cette modification libère ou exige de l'énergie. La fusion, c'est-à-dire le passage de la phase cristalline à l'état fondu en est un exemple. Les figures 1 à 3 illustrent respectivement le flux de chaleur Fc (en cal/sec/g) en fonction de la température T pour un polypropylène isotactique (IPP = fig. 1) un polymère oléfinique ayant une cristallinité intrinsèque (POC; fig. 2) et un polypropylène atactique (APP; fig. 3). De ces figures l'on observera que pour un IPP le pic de fusion se situe à environ 157° C alors que pour un POC respectivement un APP, il se trouve à environ 139° C respectivement 155° C.

Deux paramètres peuvent être mesurés à savoir :
- la zone de fusion
- l'enthalpie de la fusion.
Le tableau repris ci-dessous donne un exemple de données obtenues en fonction du type de polymère mélangé au bitume (75 % bitume - 25 % polymère).

| MELANGE | ZONE DE FUSION | ENTHALPIE DE FUSION Zone 1 | ENTHALPIE DE FUSION Zone 2 |
|---|---|---|---|
| Bitume + Polypropylène atactique (APP) | Zone 1 : 81 à 103° C | 0,078 cal/gr | 0,473 cal/g |
| | Zone 2 : 135 à 163° C | | |
| Bitume + Polyoléfine à cristallinité intrinsèque (a) | 84 à 158° C | 2,077 cal/g | |
| Bitume + Ipp | 129 à 167° C | - | 4,94 cal/g |

| | | | |
|---|---|---|---|
| Zone 1 = 1 er pic de fusion Zone 2 = 2ème pic de fusion. (a) : polyoléfine ou monomère éthylène et propylène. | | | |

Du tableau et de la figure 2 l'on observera que pour un polymère oléfinique ayant une cristallinité intrinsèque, la zone de fusion est très large par rapport aux IPP ou APP et continue avec un maximum situé pour le polymère choisi à 139° C. Lorsque le polymère oléfinique à cristallinité intrinsèque est un polyéthylène contenant dans sa structure des monomères où le nombre de carbone est supérieur à 3, le maximum de la zone de fusion se situera entre 45 et 110° C en fonction du pourcentage de ce monomère. Cette forme de réalisation n'est pas protégée par les revendications.

Ces polymères oléfiniques doivent constituer au moins 1% des polymères entrant dans la composition d'une masse bitumineuse pour la fabrication d'une membrane d'étanchéité, pour que les effets de leur présence soient observables. En effet, la présence de ce type de polymère oléfinique stabilise les huiles présentes dans la masse bitumineuse, ce qui empêche leur migration en particulier vers l'interface entre la masse bitumineuse et la couche antiexsudation quand la membrane d'étanchéité est soumise à l'action des rayons ultraviolets et de la chaleur.

Que l'huile ne migre pratiquement plus est dû au fait qu'elle est considérablement mieux stabilisée dans la masse bitumineuse. L'huile est maintenue dans la cristallinité intrinsèque des polymères oléfiniques qui font maintenant partie de la masse bitumineuse.

Afin de vérifier les propriétés améliorées de la membrane d'étanchéité selon l'invention, elle a été soumise à un test de durabilité dont le protocole est décrit dans les directives UEAtc (Union européenne pour l'agrément technique dans la construction) pour l'agrément des revêtements d'étanchéité en bitume polymère APP (polypropylène atactique) armés.

Le premier critère testé est la résistance des joints de membranes au cours du temps qui représente la résistance au délaminage des joints entre les lés de membranes.

Le principe du test est de mesurer la différence de résistance des joints de membranes entre un état neuf et un état après vieillissement thermique accéléré de ces joints obtenu dans une étuve ventilée maintenue à une température de 80°C pendant 28 jours.

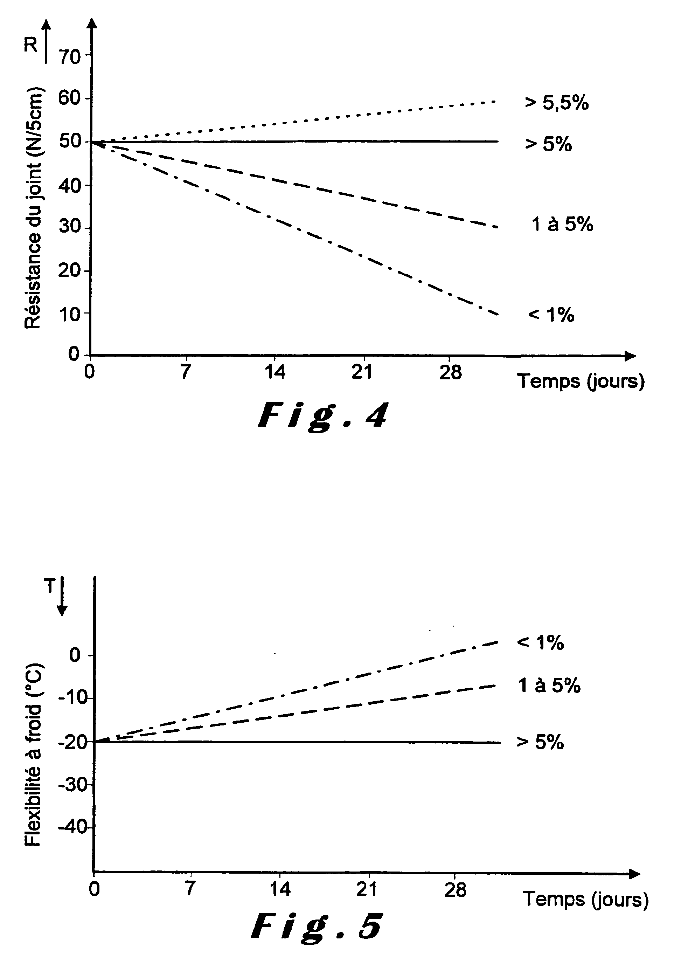

La fig. 4 met en graphique la différence de résistance R des joints au cours du test de vieillissement thermique accéléré (exprimé en jours J), pour différents pourcentages de polymères oléfiniques ayant une cristallinité intrinsèque présents dans la masse bitumineuse. Le graphique démontre une diminution de la résistance du joint supérieure à 50% de la valeur à l'état neuf si le pourcentage de ces polymères est inférieur à 1%, ce qui n'est pas conforme aux Directives Européennes en la matière. Par contre, pour un pourcentage de ces polymères compris entre 1% et 5%, la diminution de la résistance est inférieure à 50% de la valeur à l'état neuf, ce qui est conforme. Pour un pourcentage supérieur à 5% de ces polymères la résistance des joints est au moins constante au cours du temps, alors que pour un pourcentage supérieur à 5,5 % la résistance s'améliore au cours du temps.

Un autre critère utilisé pour définir la durabilité d'une membrane d'étanchéité est sa flexibilité à froid.

Le principe du test est de mesurer la température de non fissuration de la membrane soumise à l'essai de flexibilité à froid, l'essai étant réalisé sur une membrane à l'état neuf et sur une membrane ayant subi un vieillissement thermique accéléré dans une étuve ventilée maintenue à une température de 80°C pendant 28 jours.

La fig. 5 met en graphique l'évolution de la température T de non fissuration de la membrane, mesurée par l'essai de flexibilité à froid, au cours du test de vieillissement thermique accéléré, pour différents pourcentages de polymères oléfiniques ayant une cristallinité intrinsèque présents dans la masse bitumineuse. Le graphique démontre une chute importante de la flexibilité à froid par rapport à l'état neuf si le pourcentage de ces polymères est inférieur à 1%. Par contre, pour un pourcentage de ces polymères compris entre 1% et 5%, la température de non fissuration tend à rester identique à celle obtenue à l'état neuf et pour un pourcentage supérieur à 5% de ces polymères la température de non fissuration devient constante au cours du temps.

La couche antiexsudation de la membrane d'étanchéité suivant l'invention peut être constituée par un composé à base acrylique ou à base d'acétate de polyvinyle et d'une charge retardatrice de flamme, ou contenir des produits intumescents qui permettent d'obtenir une membrane d'étanchéité conforme à l'ensemble des normes antifeu décrites dans la demande de brevet internationale WO97/24485.

En outre, la couche antiexsudation comprend un composé acrylique-uréthane qui répond aux même critères que ceux énoncés dans la demande de brevet WO97/24485.

Les caractéristiques de la masse bitumineuse selon l'invention n'altèrent pas les performances antiexsudation et de résistance au feu bien connues de la demande de brevet internationale WO97/24485.

Un procédé de fabrication d'une membrane d'étanchéité suivant l'invention sera maintenant décrit et comprend de préférence trois étapes.

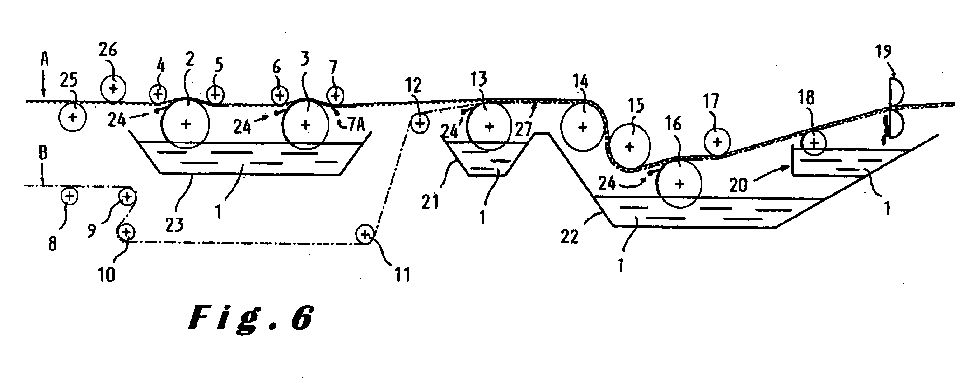

La fig. 6 illustre un exemple de réalisation du procédé de fabrication d'une membrane d'étanchéité selon l'invention.

La première étape, qui peut être réalisée au préalable comprend l'enduction d'une première nappe de fibres constituant l'armature A avec une couche antiexsudation composée de préférence à base d'acrylique ou d'acétate de polyvinyle et d'une charge minérale ou organique décrite dans la demande de brevet internationale WO97/24485. Le revêtement formé de cette façon est ensuite séché puis conduit vers les étapes suivantes.

La deuxième étape consiste à enduire la face inférieure de l'armature A, c'est-à-dire la face constituée d'une première nappe de fibres et qui n'est pas enduite de la couche antiexsudation, avec une masse bitumineuse 1. De préférence, cette masse bitumineuse est constituée des composants décrits au préalable. Il va de soi que cette masse bitumineuse peut également être appliquée sur une nappe de fibres qui ne serait pas pourvue d'une couche antiexsudation.

La troisième étape comporte l'assemblage des deux armatures A et B ainsi que l'enduction de la face inférieure de l'armature B, formée par une deuxième nappe de fibres, suivie d'une enduction de la membrane d'étanchéité ainsi constituée avec une couche de masse bitumineuse.

Les deuxièmes et troisièmes étapes assurent une bonne imprégnation des armatures A et B.

L'armature A est composée d'un non-tissé surfacé par une couche antiexsudation, le non-tissé est de préférence formé par un voile de verre, ce qui donne une meilleure stabilité dimensionnelle à la température.

L'armature B est composée par exemple d'un non-tissé polyester ou d'un complexe verre-polyester bien connu à cette fin.

Sur la fig. 6, les cylindres de rappel 25 et 26 amènent l'armature A recouverte sur la face supérieure d'une couche antiexsudation, au-dessus d'un bac d'imprégnation 23 contenant la masse bitumineuse 1 suivant l'invention.

La face inférieure de l'armature A est alors enduite avec la masse bitumineuse 1 provenant du bac d'imprégnation 23 au moyen des cylindres d'enduction 2 et 3. Ces cylindres tournent dans le bac d'imprégnation 23 contenant la masse bitumineuse 1 et donc ils se chargent en masse bitumineuse et vont imprégner par enduction la face inférieure de l'armature A. Ce procédé permet au surplus de masse bitumineuse de retomber par gravitation dans le bac d'imprégnation. Les petits cylindres 4, 5, 6, 7 permettent d'établir un contact uniforme de la surface de l'armature A sur les cylindres d'enduction 2 et 3. Comme ces petits cylindres n'entrent pas en contact avec la masse bitumineuse, ils ne peuvent souiller la couche antiexsudation.

Les racleurs 24 régulent la quantité de masse bitumineuse 1 amenée par le cylindre d'enduction sur la face inférieure de l'armature A.

Parallèlement à l'enduction de la face inférieure de l'armature A avec la masse bitumineuse 1, l'armature B est amenée grâce à des cylindres de rappel 8, 9, 10, 11, 12 jusqu'au cylindre d'enduction 13 qui permet l'enduction de la face inférieure de l'armature B avec la masse bitumineuse provenant du bac d'imprégnation 21. Ce cylindre permet également d'appliquer l'armature B sur la face inférieure de l'armature A préalablement enduite de masse bitumineuse 1. L'armature B est amenée sur le cylindre d'enduction 13, ce qui permet à l'armature B d'être enduite de bitume par en dessous et d'être appliquée sur l'armature A. Le racleur 24 régule la quantité de masse bitumineuse 1 amenée sur la face inférieure de l'armature B. Les armatures A et B assemblées avec la masse bitumineuse 1 intercalée entre les deux armatures, sont ensuite amenées par des cylindres de rappel 14, 15 sur un cylindre d'enduction 16 qui permet d'enduire la face inférieure de la membrane d'étanchéité 27 constituée, avec la masse bitumineuse provenant du bac d'imprégnation 22 situé sous le cylindre d'enduction 16. Cette masse bitumineuse peut être soit de composition égale à celle présente dans les bacs 23, 21 ou être de composition différente. Un racleur 24 permet de réguler la quantité de masse bitumineuse enduite sur la face inférieure de la membrane d'étanchéité 27 constituée des deux armatures jointes ensemble par la masse bitumineuse. La membrane d'étanchéité 27 ainsi constituée est dite à structure biarmée.

Le cylindre d'enduction 18 enduit de nouveau la face inférieure de la membrane d'étanchéité 27 avec une quantité de masse bitumineuse provenant du bac d'imprégnation 20, de façon à obtenir une épaisseur de bitume choisie. Le passage de la membrane à travers une calandre 19 calibrée permet d'obtenir l'épaisseur de membrane désirée. Le cas échéant, une composition autocollante est appliquée en surface de la masse bitumineuse, c'est-à-dire sur la face opposée à celle où est appliquée la couche antiexsudation. Ceci est par exemple réalisé à l'aide d'un autre cylindre (non repris dans les dessins) situé en aval de la calandre 19.

L'excès de bitume, que ce soit au niveau des racleurs 24 ou de la calandre 19, est récupéré dans le bac d'imprégnation correspondant, situé sous les racleurs et sous la calandre et peut être réutilisé au cours du procédé de fabrication de la membrane d'étanchéité.

L'avantage principal de ce procédé d'enduction réalisé par en dessous à l'aide de cylindres est d'éviter de souiller la face supérieure de la membrane d'étanchéité constituée par la couche antiexsudation et d'obtenir une imprégnation régulière des armatures A et B puisque les armatures sont imprégnées séparément avant d'être jointes, comme chaque fois, par en dessous. Les cylindres 4, 5, 6, 7 et 17 qui sont en contact avec le côté enduit de l'armature A restent propres et ne souillent pas la couche antiexsudation posée en surface de la membrane d'étanchéité produite suivant ce procédé.

Dans un exemple d'application, la masse bitumineuse 1 est à une température de 180°C et doit avoir une viscosité d'au moins 4000 cPs pendant toute la durée de l'enduction des armatures.

Le respect de ces conditions permet d'obtenir une membrane d'étanchéité dont la face inférieure a une surface lisse et régulière et une surface extérieure antiexsudation qui reste propre.

La membrane d'étanchéité pourvue d'une couche antiexsudation 27, fabriquée par le procédé suivant la présente invention, peut aussi comprendre des couches de masse bitumineuse ayant des compositions différentes, le bac d'imprégnation 23 pouvant contenir une masse bitumineuse ayant une composition différente de celle des bacs d'imprégnation 20, 21, 22. Par exemple, les bacs d'imprégnation 20 et 22 pouvant contenir des masses autocollantes. Il est également possible d'appliquer une couche autocollante en fin de processus.

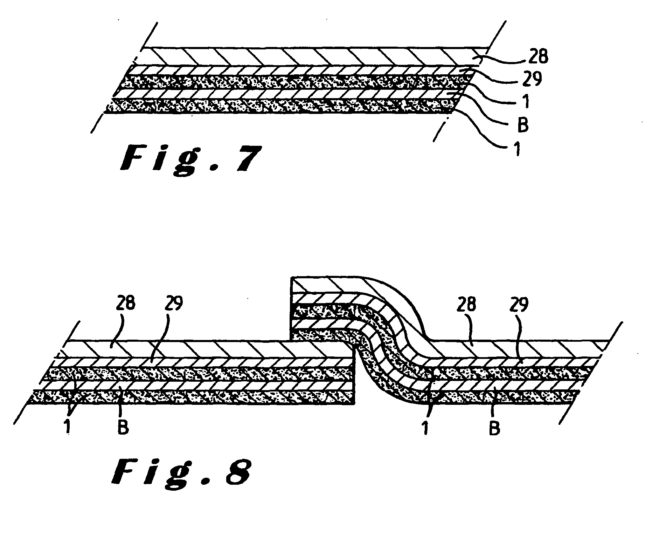

La fig. 7 illustre, à échelle agrandie, une vue en coupe à travers une membrane d'étanchéité 27 suivant l'invention. La face supérieure est constituée par une couche antiexsudation 28 enduite sur une première nappe de fibres 29 constituant l'armature A sur la face inférieure de laquelle on enduit la masse bitumineuse 1, puis l'armature B est appliquée sur la masse bitumineuse 1 et elle est elle-même enduite de masse bitumineuse 1. L'armature B est ainsi complètement imprégnée de la masse bitumineuse 1.

La fig. 8 illustre, à échelle agrandie, une vue en coupe à travers deux lés de membrane d'étanchéité dont les bords sont superposés. Les bords des lés sont superposés puis soudés à la chaleur ou collés. La composition de la masse bitumineuse de l'invention permet de réaliser les joints sans craindre d'éventuels problèmes de délamination puisque la migration d'huile au niveau des interfaces entre les lés est limitée grâce aux polymères oléfiniques ayant une cristallinité intrinsèque, entrant dans la composition de la masse bitumineuse suivant l'invention.

Il faut souligner également que la membrane d'étanchéité selon l'invention présente une faible conductivité thermique pouvant être expliquée par la faible vitesse de dissipation d'énergie au niveau de la couche antiexsudation qui présente un effet barrière ce qui engendre une meilleure soudabilité à chaud des lés de la membrane. Cette faible conductivité thermique permet de mieux maîtriser la réalisation des joints et en améliorer l'esthétique.

## Revendications

1. Membrane d'étanchéité pourvue d'une couche anti-exsudation appliquée sur une face de la membrane et d'une masse bitumineuse appliquée sur l'autre face de la membrane, ladite masse bitumineuse comprenant 15 à 85 % de bitume, **caractérisée en ce que** ladite masse bitumineuse comprend 15 à 85 % de polymères, lesquels polymères comprennent de 5 à 85 % de polypropylènes atactiques, 0 à 10 % de polypropylènes isotactiques et une quantité située entre 1 à 50 % de polymères oléfiniques ayant une cristallinité intrinsèque, ladite masse bitumineuse comprenant également 0 à 49 % de charge, ces polymères oléfiniques à cristallinité intrinsèque étant tels qu'un mélange 75 % de bitume - 25 % polymère oléfinique à cristallinité intrinsèque présente une zone de fusion qui s'étend sur une plage de température allant de 84° à 158° C et dans laquelle le flux de chaleur (Fc) atteint un maximum, à environ 139°C,

2. Membrane d'étanchéité suivant la revendication 1, **caractérisée en ce que** ladite masse bitumineuse comprend 45 à 85 % de bitume, 10 à 50% de polypropylènes atactiques, 0 à 3 % de polypropylènes isotactiques et 1 à 10% de polymères oléfiniques à cristallinité intrinsèque, ladite masse bitumineuse comprenant également 5 à 25 % de charge.

3. Membrane d'étanchéité suivant la revendication 1 ou 2, **caractérisée en ce que** les polymères oléfiniques ayant une cristallinité intrinsèque comportent des monomères d'éthylène et de propylène.

4. Membrane d'étanchéité suivant l'une quelconque des revendications 1 à 3, **caractérisée en ce que** les polymères oléfiniques ayant une cristallinité intrinsèque comportent un monomère éthylène auquel au moins un monomère oléfinique insaturé dont le nombre d'atomes de carbone est supérieur à 3 est ajouté.

5. Membrane d'étanchéité suivant la revendication 4, **caractérisée en ce que** ledit monomère oléfinique est un octène.

6. Membrane d'étanchéité suivant l'une quelconque des revendications 1 à 5, **caractérisée en ce qu'**elle est autocollante.

7. Procédé pour la fabrication de la membrane d'étanchéité suivant la revendication 1, **caractérisé en ce que** la masse bitumineuse est appliquée par enduction par en dessous de la surface à enduire sur la face inférieure d'une nappe de fibres.

8. Procédé suivant la revendication 7, **caractérisé en ce qu'**au moins la masse bitumineuse enduite sur une deuxième nappe est autocollante.

9. Procédé suivant l'une des revendications 7 ou 8, **caractérisé en ce qu'**un voile de fibres de verre est utilisé en tant que première nappe de fibres.

10. Procédé suivant la revendication 7, **caractérisé en ce qu'**après enduction des premières et deuxièmes nappes la membrane ainsi obtenue est enduite d'une masse bitumineuse de composition différente de celle dont les premières et deuxièmes nappes sont enduites.

11. Procédé suivant l'une des revendications 7 à 10, **caractérisé en ce qu'**une composition autocollante est appliquée en surface de la masse bitumineuse.

## Claims

1. Sealing membrane fitted with an anti-exudation layer applied to one face of the membrane and a bituminous mass applied to the other face of the membrane, said bituminous mass comprising 15 to 85% bitumen, **characterised in that** said bituminous mass comprises 15 to 85% polymers, which polymers comprise 5 to 85% atactic polypropylenes, 0 to 10% isotactic polypropylenes and a quantity between 1 and 50% olefinic polymers with intrinsic crystallinity, said bituminous mass also comprising 0 to 49% charge, these olefinic polymers with intrinsic crystallinity being such that a mixture of 75% bitumen - 25% olefinic polymer with intrinsic cystallinity has a fusion zone which extends over a temperature range from 84° to 158°C and in which the heat flux (Fc) reaches a maximum at around 139°C.

2. Sealing membrane according to claim 1, **characterised in that** said bituminous mass comprises 45 to 85% bitumen, 10 to 15% atactic polypropylenes, 0 to 3% isotactic polypropylenes and 1 to 10% olefinic polymers with intrinsic crystallinity, said bituminous mass also comprising 5 to 25% charge.

3. Sealing membrane according to claim 1 or 2, **characterised in that** the olefinic polymers with intrinsic crystallinity comprise monomers of ethylene and propylene.

4. Sealing membrane according to any one of claims 1 to 3, **characterised in that** the olefinic polymers with intrinsic crystallinity comprise an ethylene monomer to which is added at least one unsaturated olefinic monomer with a number of carbon atoms greater than 3.

5. Sealing membrane according to claim 4, **characterised in that** said olefinic monomer is an octene.

6. Sealing membrane according to any one of claims 1 to 5, **characterised in that** it is self-adhesive.

7. Process for the production of a sealing membrane according to claim 1 or 2, **characterised in that** the bituminous mass is applied by coating from below the surface to be coated onto the lower face of a fibre lap.

8. Process according to claim 7, **characterised in that** at least the bituminous mass applied to a second lap is self-adhesive.

9. Process according to any of claims 7 or 8, **characterised in that** a sheet of glass fibre is used as a first fibre lap.

10. Process according to claim 7, **characterised in that** after coating of the first and second laps, the resulting membrane is coated with a bituminous mass of composition different from that with which the first and second laps were coated.

11. Process according to any one of the claims 7 to 10, **characterised in that** a self-adhesive compound is applied to the surface of the bituminous mass.

## Patentansprüche

1. Dichtungsmembran, versehen mit einer Anti-Ausschwitzungsschicht, aufgetragen auf einer Seite der Membran und mit einer bituminösen Masse, aufgetragen auf der anderen Seite der Membran, wobei die besagte bituminöse Masse 15 bis 85 % Bitumen enthält, **dadurch gekennzeichnet, dass** besagte bituminöse Masse 15 bis 85 % Polymere enthält, wobei die Polymere 5 bis 85 % ataktische Polypropylene, 0 bis 10 % isotaktische Polypropylene und eine Menge zwischen 1 bis 50 % olefinische Polymere mit einer intrinsischen Kristallinität enthält, wobei die besagte bituminöse Masse ebenso 0 bis 49 % Ladung enthält, wobei diese olefinischen Polymere mit intrinsischer Kristallinität einer Mischung von 75 % Bitumen - 25 % olefinische Polymere mit einer intrinsischen Kristallinität entsprechen, wobei die Dichtungsmembran eine Fusionszone aufweist, die sich auf einen Temperaturbereich von 84 °C bis 158 °C erstreckt und in der der Wärmefluss (Fc) ein Maximum von etwa 139 °C erreicht.

2. Dichtungsmembran nach Anspruch 1, **dadurch gekennzeichnet, dass** die besagte bituminöse Masse 45 bis 85 % Bitumen, 10 bis 50 % ataktische Polypropylene, 0 bis 3 % isotaktische Polypropylene und 1 bis 10 % olefinische Polymere mit einer intrinsischen Kristallinität enthält, wobei besagte bituminöse Masse ebenfalls eine Ladung von 5 bis 25 % enthält.

3. Dichtungsmembran nach Anspruch 1 oder 2, **dadurch gekennzeichnet, dass** die olefinischen Polymere eine intrinsische Kristallinität besitzen und Monomere aus Ethylen und Propylen enthalten.

4. Dichtungsmembran nach irgendeinem der Ansprüche 1 bis 3, **dadurch gekennzeichnet, dass** die olefinischen Polymere, die eine intrinsische Kristallinität besitzen, ein Ethylenmonomer umfassen, an das mindestens ein olefinisches nicht gesättigtes Monomer angehängt ist, dessen Anzahl der Kohlenstoffatome höher als 3 ist.

5. Dichtungsmembran nach Anspruch 4, **dadurch gekennzeichnet, dass** besagtes olefinisches Monomer ein Okten ist.

6. Dichtungsmembran nach irgendeinem der Ansprüche 1 bis 5, **dadurch gekennzeichnet, dass** sie selbstklebend ist.

7. Verfahren zur Herstellung der Dichtungsmembran nach Anspruch 1, **dadurch gekennzeichnet, dass** die bituminöse Masse durch Beschichtung unter die Oberfläche aufgetragen wird, um diese auf der unteren Seite mit einer Fasermatte zu beschichten.

8. Verfahren nach Anspruch 7, **dadurch gekennzeichnet, dass** mindestens die bituminöse Masse, die sich auf einer zweiten Matte befindet, selbstklebend ist.

9. Verfahren nach einem der Ansprüche 7 oder 8, **dadurch gekennzeichnet, dass** ein Glasfasertuch als erste Matte verwendet wird.

10. Verfahren nach Anspruch 7, **dadurch gekennzeichnet, dass** nach der Beschichtung der ersten und zweiten Matten die dadurch erhaltene Membran mit einer bituminösen Masse versehen wird, die sich anders zusammensetzt als die, die auf die ersten und zweiten Matten aufgetragen wird.

11. Verfahren nach einem der Ansprüche 7 bis 10, **dadurch gekennzeichnet, dass** die selbstklebende Zusammensetzung auf die Oberfläche der bituminösen Masse aufgetragen wird.
